# EUROPÄISCHE PATENTSCHRIFT

(11) **EP 3 312 473 B1**
(45) Veröffentlichungstag und Bekanntmachung des Hinweises auf die Patenterteilung: **18.11.2020**
(21) Anmeldenummer: 17196755.7
(22) Anmeldetag: 17.10.2017
(51) Int. Cl.: F16H 25/24, F16H 25/22

(54) **KUGELGEWINDETRIEB UND VERFAHREN ZUM AUSGLEICH SEINER UNWUCHT**
BALL SCREW AND METHOD FOR COMPENSATING THE IMBALANCE OF SAME
VIS À BILLES ET PROCÉDÉ DE COMPENSATION DE SON BALOURD

(30) Priorität: 24.10.2016 DE 102016120249
(43) Veröffentlichungstag der Anmeldung: 25.04.2018
(73) Patentinhaber: SFS Intec Holding AG, 9435 Heerbrugg (CH)
(72) Erfinder: ZACH, Marijo, 9443 Widnau (CH); KUSTER, Hanspeter, 9436 Balgach (CH); KALB, Andreas, 6858 Schwarzach (AT); FREI, Stefan, 9443 Widnau (CH); HUTTER, Pascal, 9444 Diepoldsau (CH)

(56) Entgegenhaltungen:
- DE-A1-102008 002 627
- DE-A1-102008 025 349
- US-A- 5 809 838

## Beschreibung

### TECHNISCHER HINTERGRUND

Eine Kugelumlaufspindel oder auch Kugelgewindetrieb (KGT) ist die Gesamtheit eines Wälzschraubtriebes mit Kugeln als Wälzkörper. Er dient zur Umsetzung einer Drehbewegung in eine Längsbewegung bzw. umgekehrt. Im Grundsatz besteht ein KGT aus einer Gewindespindel und einer Spindelmutter (Kugelumlaufmutter).

Kugelgewindetrieben werden in vielen technischen Anwendungen eingesetzt, vor allem im Maschinenbau und dort bevorzugt in Werkzeugmaschinen. Die Untergattung der verspannten Kugelgewindetriebe, gebildet aus zwei leicht gegeneinander verspannten Kugelgewindetrieben ermöglichen dort die spielfreie und vor allem umkehrspielfreie Positionierung von e.g. Dreh- oder Fräswerkzeugen relativ zu einem Werkstück.

KGT spielen auch eine zunehmende Rolle in elektromechanischen und elektrohydraulischen Bremssystemen. Mit diesen Systemen soll Bremsdruck aufgebaut werden unabhängig von oder unterstützend zu der Bremsbetätigung des Fahrers. Das Bremssignal des Fahrers oder eines Fahrzeugsicherungssystems (e.g. Kollisionswarnung, ABS Sensorik) wird hierbei elektronisch ausgewertet und als Systemantwort auf einen Elektromotor übertragen. Dessen Drehbewegung wirkt auf eine Gewindemutter, deren Rotation in eine translatorische Bewegung einer Gewindespindel umgesetzt wird. Der dadurch entstehende Hub der Gewindespindel kann dann dazu genutzt werden, einen Kolben zu bewegen und dadurch, insbesondere hydraulisch, Bremsdruck in einem oder mehreren Bremskreisen aufzubauen oder direkt eine Bremswirkung auszuüben (e.g. Anpressen eines Bremsbelags auf eine Bremsscheibe).

### STAND DER TECHNIK

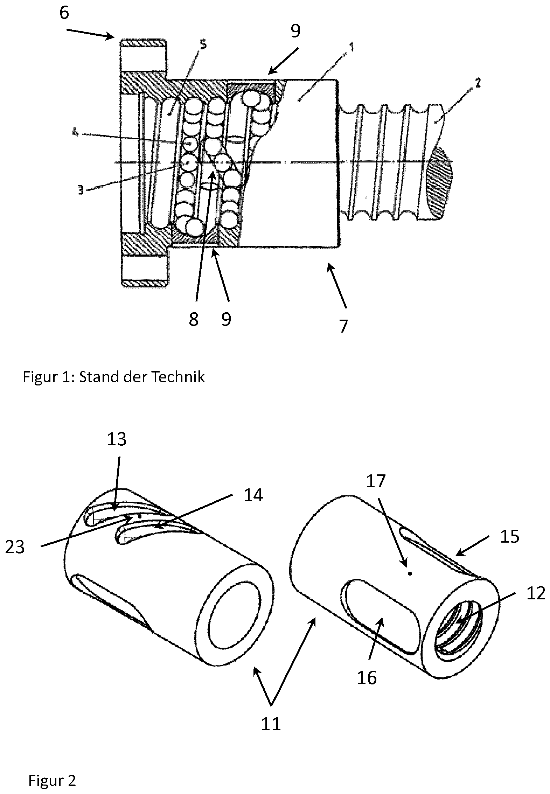

Figur 1 zeigt die Hauptbestandteile eines KGT 7, wozu eine Gewindespindel 2 und eine diese Spindel umgreifende Spindelmutter (Kugelumlaufmutter) 1 zählen. Die Spindelmutter 1 besteht aus einem Mutterkörper mit eingearbeiteten Kugelumläufen 5, die zur Geometrie der Gewindespindel 2 passend ausgelegt werden; einem Kugelrückführkanal 8 und sogenannten Rückführhülsen 9. Der Mutterkörper weist Raum auf für mehrere, tragende Kugelumläufe, sprich Innengewindegänge, die zusammen mit dem Aussengewinde der Spindel den Aufnahmeraum für die tragenden Kugeln 3, 4 bilden. Bei der Kugelrückführung (häufig auch als Kugelumlenkung bezeichnet) werden durch Einsätze in der Mutter die Kugeln am Ende des Gewindegangs vollständig von der Spindel abgehoben und zum Beispiel durch eine Rückführhülse zurückgeleitet. Die Herstellung so einer Mutter ist komplex, weil neben den Kugelumläufen (Innengewinde) und deren Nachbearbeitung auch Ausnehmungen für die Kugelrückführungen vorzusehen sind. Somit werden eine Vielzahl von Dreh-, Fräs- und Bohr-Arbeitsschritten notwendig.

Wird ein KGT als Linearantrieb eingesetzt, so kann - je nach Einsatzfall - eine ortsfest gelagerte, drehbare Spindel durch einen Motor/Getriebe angetrieben werden, worauf die Spindelmutter axial versetzt werden kann. Auch der umgekehrte Fall ist möglich, wenn eine Spindelmutter ortsfest, aber drehbar gelagert wird, kann die Gewindespindel die Linearbewegung vollführen. Wird eine hohe Lineargeschwindigkeit angestrebt, gilt es im ersten Fall die Schwingungen (seitliche Vibrationsschwingung) der Spindel unter Kontrolle zu halten. Im zweiten Fall muss die Schwingung der Gewindemutter kontrolliert werden.

US 5 809 838 A offenbart einen Kugelgewindetrieb mit einer Kugelspindelmutter welche in der Außenkontur eine Ausnehmung zur Montage von Kugelumlenkungen aufweist. Auf der gegenüberliegenden Seite dieser Ausnehmung wird eine abgeschrägte ebene Fläche gebildet, so dass die Kugelspindelmutter während ihrer Drehung ausgewuchtet werden kann. In diesem Dokument wird auch eine weitere Lösung zum Auswuchten der Kugelmutter beschrieben, bei der Bohrlöcher auf der gegenüberliegenden Seite der Ausnehmung gebildet werden.

### NACHTEILE DES STANDES DER TECHNIK

Durch die Konstruktion der Spindelmutter bedingt ist diese häufig nicht symmetrisch um ihre zentrale Rotationsachse aufgebaut. Unter anderem sorgt die Kugelumlenkung, die für die Rückführung der Kugeln zwischen den Kugelumläufen zuständig ist, dafür, dass die Hauptträgheitsachse der Spindelmutter nicht mehr mit der Rotationsachse, die durch die axiale Mittelachse der Spindel definiert wird, zusammenfällt.

Dieser Zustand führt zu einer dynamischen Unwucht der im Betrieb rotierenden Spindelmutter. Das äussert sich in erhöhter Belastung von Lagerteilen, Befestigungen und folglich in erhöhtem Verschleiss des Gesamtsystems. Zudem werden durch die dynamischen Unwuchten Vibrationen hervorgerufen, die zu hörbaren Betriebsgeräuschen führen, was häufig unerwünscht ist.

Durch den komplexen Aufbau einer Spindelmutter ist es aufwändig, eine technisch zufriedenstellende Lösung zu finden. Ein dynamisches Auswuchten scheidet aufgrund der üblicherweise hohen Produktionszahlen aus Kostengründen aus. Eine einfache Methode zur Beseitigung der Unwucht bestünde darin, möglichst identische, jedoch spiegelsymmetrische Ausnehmungen wie für die Kugelumlenkung(en) in der Spindelmutter vorzusehen und um 180° axial versetzt anzubringen. Diese Lösung würde aber bedeuten, denselben Fertigungsaufwand für die Ausgleichsbereiche zu betreiben wie für die Kugelumlenkungen. Zudem bestünde u.U. eine Verwechslungsgefahr bei der Montage und die Tatsache, dass diese Ausnehmungen die Wandung der Spindelmutter komplett durchbrechen, ist ebenfalls nachteilig. Dadurch können Stabilitätsprobleme und Undichtigkeiten verursacht werden. Ein Anbringen von Ausgleichsgewichten am Aussenumfang ist wegen des individuellen Aufwandes keine Alternative. Auch ein Vorsehen einer permanenten Erhebung am Aussenumfang ist nicht vorteilhaft, weil dies den Fertigungsaufwand erhöht.

### BESCHREIBUNG DER ERFINDUNG

Die vorliegende Erfindung hat es sich zum Ziel gesetzt, die Nachteile des Standes der Technik zu vermeiden, insbesondere eine Reduzierung der Rotationsunwucht einer Spindelmutter in einem Kugelgewindetrieb zu ermöglichen. Die gefundene Lösung hat sich dabei als anwendbar erwiesen sowohl für KGT mit einfacher wie auch mehrfacher Kugelumlenkung und darüber hinaus als einfach in der Herstellung.

Dies wird durch die Merkmale des kennzeichnenden Teils von Anspruch 1 und 10 erzielt.

Weitere, vorteilhafte Ausgestaltungen ergeben sich aus den Unteransprüchen.

Grundsätzlich wird vorgeschlagen, den Grundkörper der Spindelmutter (ohne Berücksichtigung von Flanschen oder Anbauteilen) als im Wesentlichen zylindrischen Körper zu gestalten, der Ausnehmungen für die Kugelumlenkungen aufweist. In einer vorteilhaften Ausbildung wird dabei der Aussendurchmesser dieses Grundkörpers so gross gewählt wird, dass die Kugelumlenkung nicht oder nur wenig vorkragt, sprich der Umlenkkanal plus dessen evtl. Befestigungen schliessen bündig mit der Zylinderoberfläche des Spindelmutterkörpers ab oder sind versenkt. Diese versenkte Bauweise erlaubt nach der Montage von Spindel, Muttern, Kugeln und den Umlenkungen die Sicherung der verbauten Komponenten durch einfaches Aufschieben einer runden Hülse. Durch ein leichtes Vorkragen der Kugelumlenkung lässt sich eine Selbstsicherung durch die Hülse erzielen.

Der Kern der Erfindung sieht zum Ausgleich der Unwucht flächige Ausnehmungen in der Oberfläche der Spindelmutter vorgesehen. Der Begriff "flächig" meint hierbei eine Kontur, die im üblichen Sinne keine graben- bzw. schlitzförmige Ausgestaltung hat, sondern die einer Einsenkung, deren kleinste Ausdehnung in der Fläche grösser ist als die Tiefe der Einsenkung.

Diese Fläche hat erfindungsgemäss bevorzugt die Form eines Rechtecks mit abgerundeten Ecken bzw. entspricht der Form eines flachen Langlochs bzw. Nut. Die Aussenlinien dieser Fläche sind so angeordnet, dass die geraden Abschnitte der Aussenlinie dieser Fläche parallel bzw. rechtwinklig zur Mitten-Längsachse der Spindelmutter liegen.

Alternativ kann die Ausnehmung quadratisch oder als Kreis oder Oval ausgeführt sein unter Beachtung der oben genannten Bedingung einer flächigen Ausführung.

Die Anordnung im Falle der rechteckigen bzw. quadratischen Ausgleichsfläche auf der Oberfläche der Spindelmutter wird wie folgt festgelegt. Zuerst bestimmt man den Flächenschwerpunkt einer Hüllfläche um die Ausnehmungen für die Kugelumlenkungen. Als Hüllfläche wird dabei eine einhüllende Fläche um die Gesamtheit der Ausnehmungen verstanden, wobei die Aussenlinien so gewählt werden, dass sie parallel zu den Kanten einer abgewickelten Zylinderaussenfläche des Mutterkörpers liegen. Der Flächenschwerpunkt lässt sich so sehr einfach bestimmen. Dieser Punkt wird dann um 180° um die Mittenlängsachse des Spindelmutterkörpers gedreht bzw. verschwenkt und legt dort am Ziel den Sollpunkt für die Mitte der Ausgleichsfläche fest. Der Flächenschwerpunkt berücksichtigt dabei zwar nicht die Tiefe der Ausnehmungen, das tut der Wirksamkeit der Erfindung keinen Abbruch.

Die Ausdehnung der Ausnehmung in der Fläche (in Längs- und Querdimensionen) soll gross gewählt werden, mindestens einfach, bevorzugt mindestens zweifach, besonders bevorzugt ein Mehrfaches, der Tiefe der Ausnehmung. Als Anhaltspunkt kann gelten, dass der Materialabtrag für die Kompensations-Ausnehmung so gross sein soll wie der Materialabtrag der Kugelumlenkungen +/-20%.

Die Tiefe der Ausnehmung für die Ausgleichsfläche kann parallel der Oberfläche der Spindelmutter folgen, mit anderen Worten die Bodenfläche der Ausnehmung kann Teil einer Zylindermantelfläche mit konstantem Radius zur Spindelmutterlängsachse sein. Bevorzugt wird die Ausnehmung jedoch einen ebenen Boden aufweisen, der weiter bevorzugt parallel zur Mittenachse des Spindelmutterkörpers liegt. Je nach technischer Auslegung kann der Boden der flächigen Ausnehmung einen umlaufenden, eingetieften Rand zur Zylindermantelfläche des Mutterkörpers bilden oder stellenweise flach, also ohne Randstufe, in die Zylindermantelfläche des Mutterkörpers münden.

Die Tiefe der Ausnehmung soll so gewählt werden, dass die Dauerfestigkeit des Spindelmutterkörpers nicht gefährdet wird. Je nach Wandstärke des Spindelmutterkörpers wird die Tiefe der Ausnehmung also wenige Zehntelmillimeter bis einige Millimeter betragen.

In einer Weiterbildung der Erfindung kann die Ausnehmung mehrere Abstufungen in der Tiefe aufweisen, sprich mehrere Ebenen, deren Bodenflächen die vorgenannte Bedingung einer Zylindermantelfläche erfüllen, mit jeweils unterschiedlichem Radius zur Spindelmutterlängsachse bzw. als Staffelung von ebenen Flächen vorgenannter Art. Diese somit abgetreppten Flächen bilden somit im Wesentlichen einen stufenförmigen Trichter.

Überraschenderweise wurde herausgefunden, dass eine solche Ausbildung der flächigen Ausnehmung zur Kompensation der Unwucht Vorteile bietet, wenn die Spindelmutter als Teil des Herstellprozesses eine Wärmebehandlung durchlaufen muss. Dabei lässt sich üblicherweise ein gewisser Verzug des Bauteils nicht vermeiden, weil durch vorangegangene Umformprozesse das Metallgefüge gestört wurde und die Ausnehmungen für Kugelumlenkungen verhindern, dass der Relaxationsprozess für das gesamte Bauteil gleichmässig verläuft. Wenn nun neben den Ausnehmungen für die Kugelumlenkungen auch die erfindungsgemässen flächigen Ausnehmungen für die Unwucht-Kompensation in die Oberfläche des Spindelmutterkörpers eingebracht werden, hat sich gezeigt, dass der Wärmebehandlungsverzug für das Gesamtbauteil besser ist als ohne die Kompensationsausnehmungen.

Es kann sich als vorteilhaft erweisen, wenn anstatt einer Kompensations-Ausnehmung zwei solche vertiefte Flächen vorgesehen werden. Dies kann erforderlich werden, wenn z.B. eine einzelne Ausnehmung aus Stabilitätsgründen nicht in Frage kommt oder eine so grosse Fläche nicht am Stück zur Verfügung steht. Bevorzugt werden solche Flächen um den gleichen Winkelbetrag seitlich im Uhrzeiger- und Gegenuhrzeigersinn verschoben höhengleich an der Zylindermantelfläche angeordnet, mit anderen Worten symmetrisch zum vorhin definierten Sollpunkt verschwenkt. Die beiden Ausnehmungen werden bevorzugt gleichartig in ihrer Dimensionierung ausgeführt.

Der Vorteil einer solchen flächigen Ausnehmung ist, dass sie die Wandstärke der Spindelmutter nur unwesentlich schwächt und vor allem keine Durchgangslöcher in den Innenbereich des KGT zur Folge hat. Zudem lässt sie sich idealerweise in einem Aufspann mit den Ausfräsungen für die Kugelumlenkungen fertigen. Dazu kann z.B. ein Fingerfräser zum Einsatz kommen. Ferner wird die dynamische Unwucht hiermit durch Materialabtrag statt durch Hinzufügen von Ausgleichsgewichten beseitigt.

### FIGURENBESCHREIBUNG

Figur 1 zeigt ein KGT 7 mit einer Gewindespindel 2 und eine diese Spindel umgreifende Spindelmutter (Kugelumlaufmutter) 1. Die Spindelmutter 1 weist einen Mutterkörper mit eingearbeiteten Kugelumläufen bzw. Gewindegängen 5 auf, die zur Geometrie der Gewindespindel 2 passend ausgelegt werden. Ein Kugelrückführkanal 8 und sogenannten Rückführhülsen 9 erlauben das Aus- und Einheben von Kugeln 3, 4 von bzw. in die Kugelumläufe. Bei der Kugelrückführung bzw. Kugelumlenkung werden durch Einsätze in der Mutter die Kugeln am Ende des Gewindegangs vollständig von der Spindel abgehoben und durch eine Rückführhülse zurückgeleitet. Figur 1 zeigt ferner einen Flansch 6, über den die Spindelmutter befestigt werden kann um die auftretenden Kräfte ableiten zu können. Das Material für Spindel wie Mutter sind kaltumformbare Stähle, die je nach Auslegung des KGTs in mehreren Arbeitsschritten umgeformt und spanend bearbeitet werden. Nachbearbeitungsschritte wie Reinigung, Wärmebehandlung, Oberflächenbehandlung (Vergütung, Härtung) wird ein Fachmann je nach Spezifikation vorsehen.
Figur 2 zeigt einen erfindungsgemässen Spindelmutterkörper 11 mit zwei Ausnehmungen 15, 16 zur Kompensation der Unwucht. Der Spindelmutterkörper weist eine im Wesentlichen zylinderförmige Aussenkontur auf mit einer axialen Längsbohrung, die zumindest teilweise ein Innengewinde 12 aufnimmt. Die Ausnehmungen 13 und 14 markieren die für Kugelrückführkanäle vorgesehenen Ausfräsungen bzw. Aussparungen in der Spindelmutter. Etwaige funktionelle Einsätze sind hier nicht gezeigt. Der Spindelkörper rechts in Figur 2 ist gegenüber Figur 1 um 180° axial rotiert dargestellt. Die Ausnehmungen 15, 16 sind dort als Nuten mit ebenem Boden dargestellt, könnten aber auch in den oben beschriebenen Varianten gefertigt werden oder auch als einteilige Vertiefung. Merkmal 17 zeigt die Lage des oben beschriebenen Sollpunktes, von dem ausgehend die beiden Vertiefungen 15, 16 jeweils um denselben Winkelbetrag verschoben bzw. verschwenkt wurden.

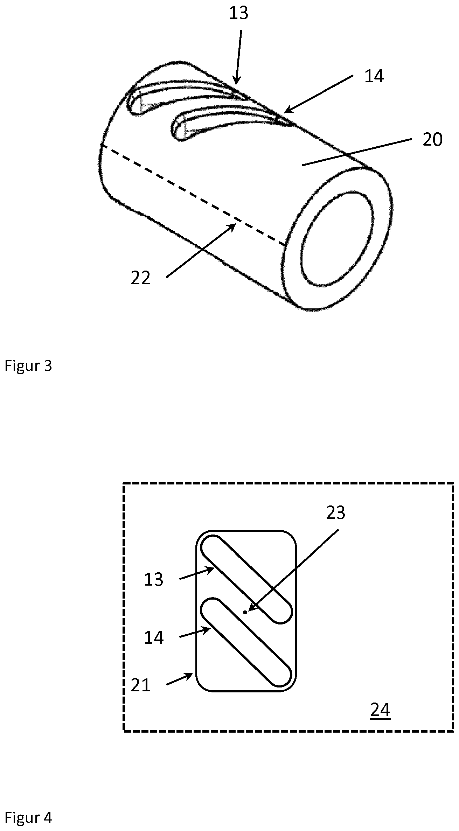

Die Figuren 3 und 4 illustrieren die Ermittlung des Sollpunktes zur Anordnung der Ausgleichsflächen. Figur 3 zeigt einen zylinderförmigen Spindelmutterkörper 11 mit den Ausnehmungen 13 und 14. Die Zylindermantelfläche 20 lässt sich beginnend an einer beliebigen Trennlinie 22 abwickeln.
Figur 4 zeigt den Zustand der abgewickelten Zylindermantelfläche 24 als Fläche. Um die Areale der Ausnehmungen 13, 14 ist die Hüllfläche 21 gezeigt. Deren Aussenlinien sind parallel zu den Aussenlinien der abgewickelten Zylindermantelfläche gewählt. Merkmal 23 markiert den geometrisch ermittelten Flächenmittelpunkt der Hüllfläche, der anschliessend, wie oben beschrieben verschwenkt wird, um den Ort der Ausgleichsfläche zu ermitteln.

### BEZUGSZEICHENLISTE

- 1: Spindelmutter
- 2: Gewindespindel
- 3, 4: Kugel(n)
- 5: Kugelumläufe
- 6: Flansch
- 7: Kugelgewindetrieb
- 10: Abgewickelte Mantelfläche
- 11: Spindelmutter(körper)
- 12: Innengewinde der Spindelmutter
- 13, 14: Aussparungen für Kugelumlenkkanal
- 15, 16: Ausnehmung(en) für Unwuchtausgleich
- 17: Sollpunkt für die Mitte der Ausgleichsfläche
- 20: Zylindermantelfläche der Spindelmutter
- 21: Hüllfläche
- 22: Trennlinie der Zylindermantelfläche 20
- 23: Flächenmittelpunkt der Hüllfläche
- 24: Abgewickelte Zylindermantelfläche 20

## Patentansprüche

1. Kugelgewindetrieb (7), mit mindestens einer Gewindespindel (2) und einer Spindelmutter (11), welche eine im Wesentlichen zylinderförmigen Aussenkontur aufweist mit Ausnehmungen (13, 14) für den Einbau von Kugelumlenkung und Umlenkkanal, **dadurch gekennzeichnet, dass** am Aussenumfang der Spindelmutter zwei flächige Ausnehmungen (15, 16) in der Oberfläche vorgesehen sind, welche die Form eines Rechtecks bzw. Vierecks mit abgerundeten Ecken oder eines flachen Langlochs oder einer Nut aufweisen; und deren Mittelpunkt um einen gleichen Winkelbetrag im Uhrzeiger- und Gegenuhrzeigersinn relativ zu einem Sollpunkt (17) höhengleich verschoben an der Zylindermantelfläche angeordnet sind, wobei dieser Sollpunkt um 180° um die Mittenlängsachse des Spindelmutterkörpers verschwenkt angeordnet ist, bezogen auf den Flächenschwerpunkt (23), der von einer Hüllfläche (21) um die Ausnehmungen (13, 14) für die Kugelumlenkungen definiert wird..

2. Kugelgewindetrieb nach Anspruch 1, **dadurch gekennzeichnet, dass** die Aussenlinien der flächigen Ausnehmungen (15, 16) im Falle eines Rechtecks so angeordnet sind, dass die geraden Abschnitte der Aussenlinie dieser Ausnehmung parallel bzw. rechtwinklig zur Mitten-Längsachse der Spindelmutter (11) liegen.

3. Kugelgewindetrieb nach Anspruch 1 bis 2, **dadurch gekennzeichnet, dass** die flächigen Ausnehmungen (15, 16) je einer Einsenkung entsprechen, deren kleinste Ausdehnung in der Fläche grösser ist als die Tiefe der Einsenkung.

4. Kugelgewindetrieb nach Anspruch 1 bis 3, **dadurch gekennzeichnet, dass** die Längs- und Querdimensionen der flächigen Ausnehmungen (15, 16) mindestens einfach, bevorzugt mindestens zweifach, besonders bevorzugt ein Mehrfaches, der Tiefe der Ausnehmung betragen.

5. Kugelgewindetrieb nach Anspruch 1 bis 4, **dadurch gekennzeichnet, dass** die Tiefe der Ausnehmungen (15, 16) parallel der Oberfläche der Spindelmutter folgt und die Bodenfläche der Ausnehmungen somit Teil einer Zylindermantelfläche mit konstantem Radius zur Spindelmutterlängsachse ist.

6. Kugelgewindetrieb nach Anspruch 1 bis 5, **dadurch gekennzeichnet, dass** die Ausnehmungen (15, 16) einen ebenen Boden aufweisen, der parallel zur Mittenachse des Spindelmutterkörpers ausgerichtet ist.

7. Kugelgewindetrieb nach Anspruch 1 bis 6, **dadurch gekennzeichnet, dass** der Boden der flächigen Ausnehmung (15, 16) einen umlaufenden, eingetieften Rand zur Zylindermantelfläche (20) des Mutterkörpers (11) hat oder zumindest stellenweise flach ohne Randstufe in die Zylindermantelfläche des Mutterkörpers mündet.

8. Kugelgewindetrieb nach Anspruch 1 bis 7, **dadurch gekennzeichnet, dass** der Boden der flächigen Ausnehmungen mindestens zwei abgetreppte Ebenen aufweist, die im Wesentlichen einen stufenförmigen Trichter bilden.

9. Kugelgewindetrieb nach Anspruch 1 bis 8, **dadurch gekennzeichnet, dass** die Tiefe der Ausnehmungen wenige Zehntelmillimeter bis wenige Millimeter beträgt.

10. Verfahren zum Ausgleich der Unwucht eines Kugelgewindetriebes nach einem der Ansprüche 1 bis 9, **dadurch gekennzeichnet, dass** zwei flächige Ausnehmungen in der Oberfläche der Spindelmutter (11) vorgesehen werden in Form eines Rechtecks mit abgerundeten Ecken oder eines flachen Langlochs oder einer Nut, wobei die Anordnung der Ausgleichsfläche durch folgende Schritte festgelegt wird:
• Bestimmen des Flächenschwerpunkts (23) einer Hüllfläche um die Ausnehmungen für die Kugelumlenkungen.
• Verschwenken dieses Punktes um 180° um die Mittenlängsachse des Spindelmutterkörpers
• Festlegung als Sollpunkt (17)
• Herstellen zweier flächiger Ausnehmungen (15, 16) um den gleichen Winkelbetrag seitlich im Uhrzeiger- und Gegenuhrzeigersinn verschoben höhengleich an der Zylindermantelfläche angeordnet, symmetrisch zum Sollpunkt verschwenkt.

## Claims

1. A ball screw drive (7) having at least one threaded spindle (2) and a spindle nut (11) which has a substantially cylindrical outer contour with recesses (13, 14) for the installation of a ball deflector and a deflection channel, **characterized in that** two flat recesses (15, 16) are provided in the surface on the outer circumference of the spindle nut, which recesses have the shape of a rectangle or quadrangle with rounded corners or of a flat elongated hole or a groove; and the center points of which are arranged on the cylinder shell surface at the same height and displaced by an equal angular amount in a clockwise and counterclockwise direction relative to a set point (17), wherein this set point is arranged pivoted by 180° about the central longitudinal axis of the spindle nut body, relative to the center of gravity (23) that is defined by an enveloping surface (21) around the recesses (13, 14) for the ball deflections.

2. The ball screw drive according to claim 1, **characterized in that** in the case of a rectangle, the outer lines of the flat recesses (15, 16) are arranged in such a manner that the straight sections of the outer line of this recess are parallel or perpendicular to the central longitudinal axis of the spindle nut (11).

3. The ball screw drive according to claims 1 to 2, **characterized in that** the flat recesses (15, 16) each correspond to a countersink, the smallest extent of the surface area of which is greater than the depth of the countersink.

4. The ball screw drive according to claims 1 to 3, **characterized in that** the longitudinal and transverse dimensions of the flat recesses (15, 16) are at least one time, preferably at least two times, particularly preferably multiple times the depth of the recess.

5. The ball screw drive according to claims 1 to 4, **characterized in that** the depth of the recesses (15, 16) follows parallel to the surface of the spindle nut, and the bottom surface of the recesses is thus part of a cylinder shell surface with a constant radius to the longitudinal axis of the spindle nut.

6. The ball screw drive according to claims 1 to 5, **characterized in that** the recesses (15, 16) have a planar bottom which is aligned parallel to the central axis of the spindle nut body.

7. The ball screw drive according to claims 1 to 6, **characterized in that** the bottom of the flat recess (15, 16) has a circumferential, recessed edge to the cylinder shell surface (20) of the nut body (11) or at least in some places runs flat without an edge step into the cylinder shell surface of the nut body.

8. The ball screw drive according to claims 1 to 7, **characterized in that** the bottom of the flat recesses has at least two stepped planes which substantially form a step-shaped funnel.

9. The ball screw drive according to claims 1 to 8, **characterized in that** the depth of the recesses is a few tenths of a millimeter to a few millimeters.

10. A method for compensating the imbalance of a ball screw drive according to any one of claims 1 to 9, **characterized in that** two flat recesses are provided in the surface of the screw nut (11) in the form of a rectangle with rounded corners or of a flat elongated hole or groove, wherein the arrangement of the compensation surface is determined by the following steps:
• determining the center of gravity (23) of an enveloping surface around the recesses for the ball deflectors,
• pivoting this point by 180° about the central longitudinal axis of the spindle nut body,
• defining as set point (17),
• manufacturing two flat recesses (15, 16) displaced laterally clockwise and counterclockwise by the same angular amount and arranged at the same height on the cylinder shell surface, pivoted symmetrically to the set point.

## Revendications

1. Vis d'entraînement à billes (7) avec au moins une broche filetée (2) et un écrou de broche (11), lequel comporte un profil extérieur pour l'essentiel cylindrique avec des évidements (13, 14) pour le montage de renvoi de billes et de conduit de billes, **caractérisée en ce que** sur la périphérie extérieure de l'écrou de broche deux évidements plans (15, 16) sont prévus dans la surface, lesquels présentent la forme d'un rectangle ou d'un carré avec des angles arrondis ou d'un trou oblong plat ou d'une rainure et dont le point central de ceux-ci est disposé sur la surface d'enveloppe, déplacé à même hauteur d'une valeur angulaire identique à droite et à gauche par rapport à un point théorique (17), sachant que ce point théorique est disposé pivoté de 180° autour de l'axe longitudinal médian du corps d'écrou de broche en se référant au centre de gravité de surface (23), qui est défini par une surface d'enveloppe (21) autour des évidements (13, 14) pour les renvois de billes.

2. Vis d'entraînement à billes selon la revendication 1, **caractérisée en ce que** les lignes extérieures des évidements plans (15, 16) en cas d'un rectangle sont disposées de telle manière que les sections droites de la ligne extérieure de cet évidement se situent parallèles ou à angle droit par rapport à l'axe longitudinal médian de l'écrou de broche (11).

3. Vis d'entraînement à billes selon les revendications 1 à 2, **caractérisée en ce que** les évidements plans (15, 16) correspondent respectivement à un chambrage, dont l'extension minimale dans la surface est supérieure à la profondeur du chambrage.

4. Vis d'entraînement à billes selon les revendications 1 à 3, **caractérisée en ce que** les dimensions longitudinales et transversales des évidements plans (15, 16) sont au moins une fois, de préférence au moins deux fois, en particulier de préférence plusieurs fois la profondeur de l'évidement.

5. Vis d'entraînement à billes selon les revendications 1 à 4, **caractérisée en ce que** la profondeur des évidements (15, 16) passe parallèlement à la surface de l'écrou de broche et la surface de fond des évidements fait ainsi partie d'une surface d'enveloppe cylindrique avec un rayon constant par rapport à l'axe longitudinal d'écrou de broche.

6. Vis d'entraînement à billes selon les revendications 1 à 5, **caractérisée en ce que** les évidements (15, 16) comportent un fond plan, qui est orienté parallèlement à l'axe médian du corps d'écrou de broche.

7. Vis d'entraînement à billes selon les revendications 1 à 6, **caractérisée en ce que** le fond de l'évidement plan (15, 16) possède un bord périphérique, approfondi par rapport à la surface d'enveloppe cylindrique (20) du corps d'écrou (11) ou débouche au moins par endroits à plat sans rebord dans la surface d'enveloppe cylindrique du corps d'écrou.

8. Vis d'entraînement à billes selon les revendications 1 à 7, **caractérisée en ce que** le fond des évidements plans comporte au moins deux plans en gradins, qui forment pour l'essentiel un entonnoir échelonné.

9. Vis d'entraînement à billes selon les revendications 1 à 8, **caractérisée en ce que** la profondeur des évidements est de quelques dixièmes de millimètre à quelques millimètres.

10. Procédé d'équilibrage de l'excentrage d'une vis d'entraînement à billes selon l'une quelconque des revendications 1 à 9, **caractérisé en ce que** deux évidements plans sont prévus dans la surface de l'écrou de broche (11) sous la forme d'un rectangle avec des angles arrondis ou d'un trou oblong plat ou d'une rainure, sachant que la disposition de la surface d'équilibrage est définie par les étapes suivantes :
• détermination du centre de gravité de surface (23) d'une surface d'enveloppe autour des évidements pour les renvois de billes,
• pivotement de ce point de 180° autour de l'axe longitudinal médian du corps d'écrou de broche,
• définition en tant que point théorique (17),
• réalisation de deux évidements plans (15, 16) disposés sur la surface d'enveloppe cylindrique, à la même hauteur, déplacés latéralement de la même valeur angulaire à droite et à gauche, pivotés symétriquement par rapport au point théorique.
